Europäisches Patentamt

European Patent Office

Office européen des brevets

(11) Veröffentlichungsnummer : **0 381 829 B1**

# (12) EUROPÄISCHE PATENTSCHRIFT

(45) Veröffentlichungstag der Patentschrift :
**06.05.92 Patentblatt 92/19**

(21) Anmeldenummer : **89121938.8**

(22) Anmeldetag : **28.11.89**

(51) Int. Cl.⁵ : **F16H 57/02**

(54) **Drehmomentenstütze für Aufsteckgetriebe.**

(30) Priorität : **09.01.89 DE 3900392**

(43) Veröffentlichungstag der Anmeldung :
**16.08.90 Patentblatt 90/33**

(45) Bekanntmachung des Hinweises auf die
Patenterteilung :
**06.05.92 Patentblatt 92/19**

(84) Benannte Vertragsstaaten :
**AT BE CH DE ES FR GB GR IT LI LU NL SE**

(56) Entgegenhaltungen :
**EP-A- 0 247 231**
**DE-A- 2 617 142**
**DE-B- 2 358 768**
**US-A- 3 001 409**
**Zeitschrift "technica", 1969, Nr. 10, S. 873-876**

(73) Patentinhaber : **Firma Heinrich Desch KG**
**Kleinbahnstrasse 21**
**W-5760 Arnsberg 1 (DE)**

(72) Erfinder : **Hille, Friedrich, Dipl.-Ing.**
**Schlossstrasse 9**
**W-5840 Schwerte 3 (DE)**
Erfinder : **Curdes, Herbert, Dipl.-Ing.**
**Karl-Wagenfeld-Strasse 38**
**W-5760 Arnsberg 1 (DE)**
Erfinder : **Desch, Axel**
**Ölinghauser Heide**
**W-5760 Arnsberg 1 (DE)**

(74) Vertreter : **Fritz, Herbert, Dipl.-Ing. et al**
**Mühlenberg 74**
**W-5760 Arnsberg 1 (DE)**

## Beschreibung

Bei Aufsteckgetrieben ist die Getriebe-Abtriebswelle mit der Antriebswelle einer Maschine durch Aufstecken verbunden, so daß mittels einer sogenannten Drehmomentenstütze das am Getriebegehäuse wirksame Reaktionsmoment ortsfest abgestützt werden muß. Nach dem Stand der Technik (Zeitschrift "technica", 1969, Nr. 10, S 873 bis 876) sind zu diesem Zweck Abstützgabeln oder Hebel als zusätzliche Teile bekannt, die seitlich am Gehäuse montiert werden und entsprechenden seitlichen Platz benötigen. Diese bekannten Abstützungen haben, auch wenn sie elastisch ausgeführt sind, Rückstellkräfte auf das Getriebe zur Folge und funktionieren nicht spielfrei, insbesondere bei Umkehr der Drehrichtung.

Die Erfindungsaufgabe besteht in der Entwicklung einer Drehmomentenstütze für Aufsteckgetriebe, für deren Montage kein seitlicher Platz benötigt wird, und die eine elastische Abstützung ohne schädliche Verspannungen bei der Montage und im Betrieb des Getriebes hervorruft, sowie für beide Drehrichtungen gleich gut geeignet ist.

Außer dem vorgenannten Stand der Technik sind (DE-A- 2 617 142, EP-A-0 247 231) zur Übertragung von Drehmomenten federnde Laschen bekannt, die in einer Ebene tangential zur Drehachse zwischen zwei Ringelementen angeordnet und mit einem Ende an dem einen Ring, mit dem anderen Ende an dem anderen Ring angeschraubt sind. Die federnden Laschen sind ,dabei jedoch stets mit speziellen Kupplungselementen kombiniert. Bekannt sind außerdem (DE-B- 2 358 768) bei einem Umlaufgetriebe mit Lastausgleich zur Abstützung eines Drehmoments Kettenglied ähnlich angeordnete flache Federn im Innern eines Getriebegehäuses, das ortsfest gehalten ist und somit keiner zusätzlichen Drehmomentenstütze bedarf. Aus dem vorgenannten Stand der Technik kann keine Anregung zur Lösung der in Rede stehenden Aufgabe entnommen werden.

Die Aufgabe wird durch eine Drehmomentenstütze mit den Merkmalen des Hauptanspruchs gelöst. Die Unteransprüche haben bevorzugte Ausführungsformen oder Varianten des Lösungsprinzips zum Inhalt.

Eine solche Drehmomentenstütze umgibt die Steckverbindung der Wellen konzentrisch und stellt eine Abstützung des Getriebegehäuses stirnseitig an der angetriebenen Maschine im Bereich deren Antriebswelle her. Die Montage kann ohne weiteres im Zusammenhang mit der Steckverbindung erfolgen. Bei der Montage wird einerseits das maschinenseitige Ringpaar an der Maschine angeschraubt, andererseits das getriebeseitige Ringpaar am Getriebe zunächst ohne Montage der Hohlwelle. Für die Herstellung einer beliebigen kraftschlüssigen Steckverbindung beispielsweise mit Hilfe einer sogenannten Schrumpfscheibe ist in ausreichendem Maße Zwischenraum vorhanden. Nach Herstellung der Steckverbindung werden die beiden Halbteile der Hohlwelle angesetzt, miteinander und mit den Ringpaaren verbunden.

Die Elastizität der Abstützung ergibt sich aufgrund der polygonartig angeordneten Federlaschen, die jeweils die beiden Ringe eines Ringpaares miteinander verbinden. Durch diese Art der Verbindung wird das reine Drehmoment vom Getriebegehäuse in das Maschinengehäuse eingeleitet. Eine solche kardanische Drehmomentenstütze gewährleistet eine drehsteife und spielfreie Aufhängung. Im weiten Bereich sind sowohl axiale als auch abgewinkelte Verlagerungen der Wellen möglich, so daß während der Montage und während des Betriebs keine Verspannungen auftreten können. Eventuelle Rückstellkräfte sind verschwindend gering. Es unterbleiben schädliche Krafteinwirkungen auf Maschinenlager und Getriebelager. Die Drehmomentenstütze ist weitgehend querkraftfrei. Querkräfte brauchen somit auch bei der Dimensionierung des Getriebes nicht in Betracht gezogen zu werden, was die Herstellung des Getriebes wirtschaftlich macht. Auch ist der Platzbedarf für die Montage der Drehmomentenstütze im Bereich der Steckverbindung gering, so daß insgesamt gesehen bei Anwendung eines Umlaufrädergetriebes ein relativ geringes Bauvolumen des gesamten Antriebs erreicht wird.

Die erforderlichen vier Ringe sind im Querschnitt einfach und identisch. Die Bohrungen zur Aufnahme der Verbindungsschrauben können entweder direkt am Rechteckquerschnitt des Ringes ausgebildet sein, oder aber auch an einem besonders angeformten Ringflansch. Je nach der Ausbildung des Getriebegehäuses bzw. des Maschinengehäuses wird die eine oder die andere Ausführungsform bevorzugt.

Federlaschen eignen sich zum Anbringen von Dehnmeßstreifen zur Ermittlung des Drehmomentes aufgrund der gemessenen Dehnung. Solche Messungen werden beispielsweise im Zusammenhang mit einer Überlastsicherung der Maschine oder des Getriebes vorgenommen oder auch im Zusammenhang mit einer Verfahrenssteuerung. Die Messung wird an einem stehenden Teil vorgenommen, was günstige Voraussetzungen für die Meßgenauigkeit hat. Man kann einfache also preiswerte Meßelemente nehmen, deren Meßgenauigkeit auch für längere Zeit gewährleistet ist. Bei einer formschlüssigen Steckverbindung, z. B. mittels Nut und Paßfeder, kann bei einer vereinfachten Ausführungsform des Erfindungsgegenstandes die Hohlwelle auch einstückig ausgeführt werden.

Ausführungsbeispiele der Erfindung werden im folgenden näher beschrieben unter Bezugnahme auf die beiliegenden Zeichnungen.

Fig. 1 ist eine Draufsicht auf einen Ring als Konstruktionselement einer Drehmomentenstütze nach der Erfindung;

Fig. 2 ist ein Schnitt nach II-II von Fig. 1;

Fig. 3 ist ein Schnitt III von Fig. 1;

Fig. 4 zeigt einen Längsschnitt durch eine mit vier Ringen nach Abbildung 1 bis 3 aufgebaute Drehmomentenstütze nach IV-IV von Fig. 5;

Fig. 5 ist ein Schnitt durch diese Drehmomentenstütze nach V-V von Fig. 4;

Fig. 6 ist ein Längsschnitt durch eine Drehmomentenstütze gemäß Fig. 1 bis 5, die zwischen einem Umlaufrädergetriebe und einer angetriebenen Maschine eingebaut ist;

Fig. 7 ist ein Längsschnitt durch eine Drehmomentenstütze nach der Erfindung unter Verwendung von etwas anders ausgebildeten Ringen;

Fig. 8 ist ein Schnitt nach VIII-VIII von Fig. 7;

Fig. 9 ist eine Draufsicht auf eine Federlasche der Drehmomentenstütze, ausgerüstet mit Dehnmeßstreifen.

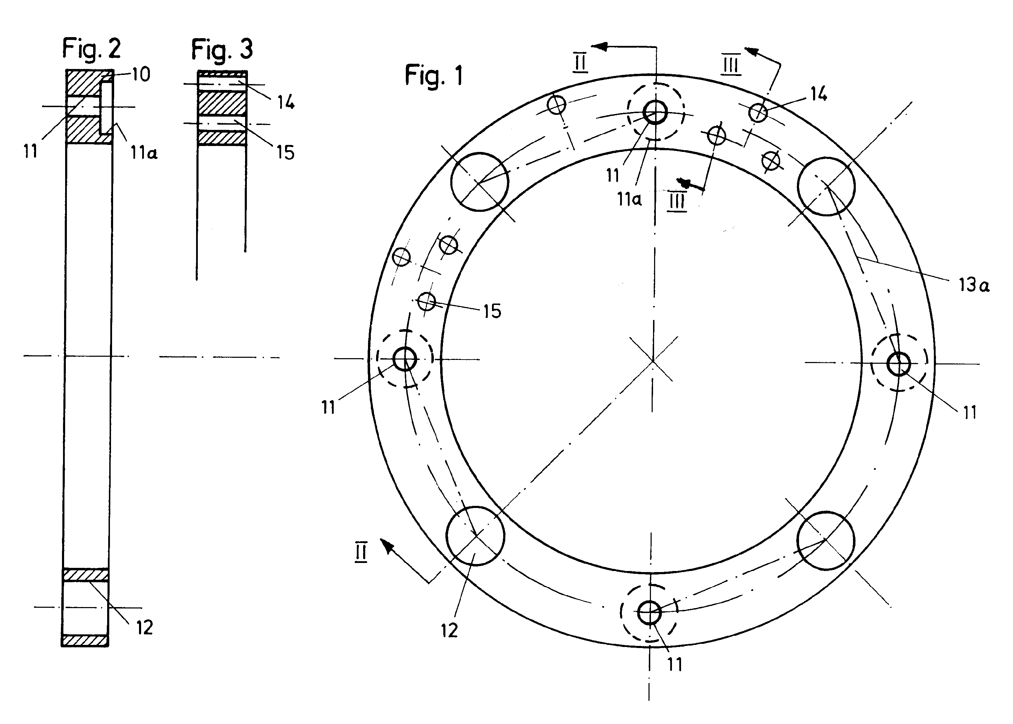

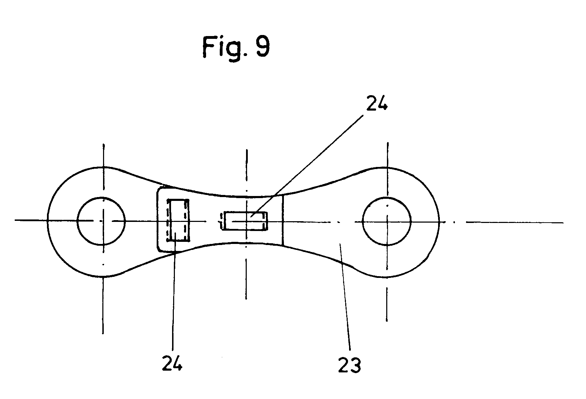

Die für die Drehmomentenstütze vorgesehenen Ringe 10 (Fig. 1 bis 3) haben einen rechteckigen Querschnitt. In Winkelabständen von 90° sind achsparallel vier Bohrungen 11 gebildet, zur Aufnahme von Schraubenschäften, mit denen anliegend Federlaschen 13, wie auf Fig. 9 dargestellt, angeschraubt werden. Die Laschen haben an jedem Endbereich eine entsprechende Bohrung zur Aufnahme des Schraubenschaftes. Jeder Bohrung 11 für den Schraubenschaft ist eine Ausnehmung 11a zur Aufnahme des zugehörigen Schraubenkopfes zugeordnet.

Der andere Endbereich einer jeden Lasche wird nicht am gleichen Ring sondern an einem daneben liegenden Ring angeschraubt. Um einen Raum zur Aufnahme der zu dieser Schraubverbindung gehörenden Mutter zu schaffen, sind an den Ringen vier Bohrungen 12 als Mutteraufnahme gebildet. Diese Bohrungen sind durchgehend ausgeführt. Die Laschen erstrecken sich entlang der auf Fig. 1 dargestellten Sehnen 13a eines Teilkreises.

Weiterhin sind an jedem Ring Bohrungen 14, auf einem größeren Teilkreis liegend, sowie weitere Bohrungen 15 auf einem kleineren Teilkreis liegend,gebildet. Diese Bohrungen dienen zur Aufnahme von Verbindungsschrauben, mit denen der Ring an einem Getriebegehäuse, einem Maschinengehäuse oder an einer Hohlwelle angeschraubt wird.

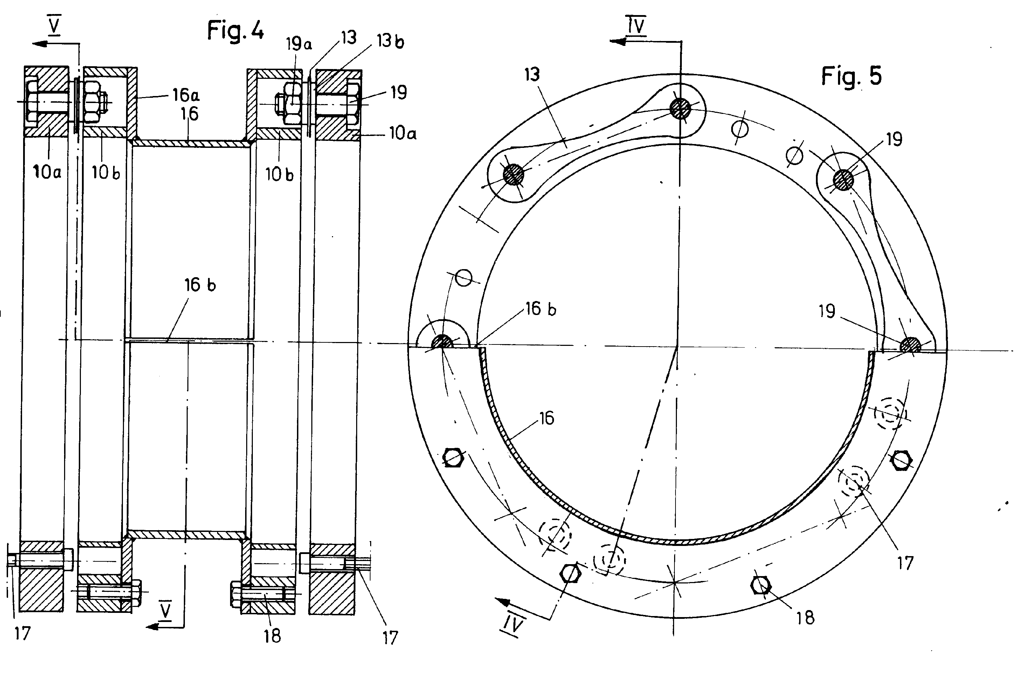

Die Drehmomentenstütze ergibt sich durch einen kombinatorischen Zusammenbau von vier Ringen gemäß Fig. 1 bis 3 und einer Hohlwelle 16, wie auf Fig. 4 und 5 dargestellt. Es liegen jeweils zwei Ringe nebeneinander, nämlich jeweils ein äußerer Ring 10a und ein innerer Ring 10b. Die beiden inneren Ringe sind mit Verbindungsschrauben 18 mit jeweiligen Flanschen 16a der Hohlwelle starr und drehfest verbunden. Die im vorliegenden Fall die elastische Verbindung bewirkenden Laschen, hier jeweils vier, sind jeweils zwischen einem äußeren Ring 10a und einem inneren Ring 10b angeordnet, wie Fig. 4 und 5 zeigen. Fig. 4 läßt auch erkennen, wie jeweils die Mutter einer Befestigungsschraube 19 für eine Federlasche von einer Aufnahme 12 des daneben liegenden Ringes aufgenommen wird. Im Bereich der Schraubverbindung liegen an der Federlasche zwei Scheiben 13b an. Während die Verbindungsschrauben 18 die drehfeste starre Verbindung zwischen zwei Ringen und einer Hohlwelle herstellen sind die Verbindungsschrauben 17 für eine Verbindung der äußeren Ringe mit dem Maschinengehäuse bzw. Getriebegehäuse vorgesehen.

Aus montagetechnischen Gründen ist die Hohlwelle 16 aus zwei halbkreisförmigen Schalen zusammengesetzt, wobei sich eine Fuge 16b ergibt.

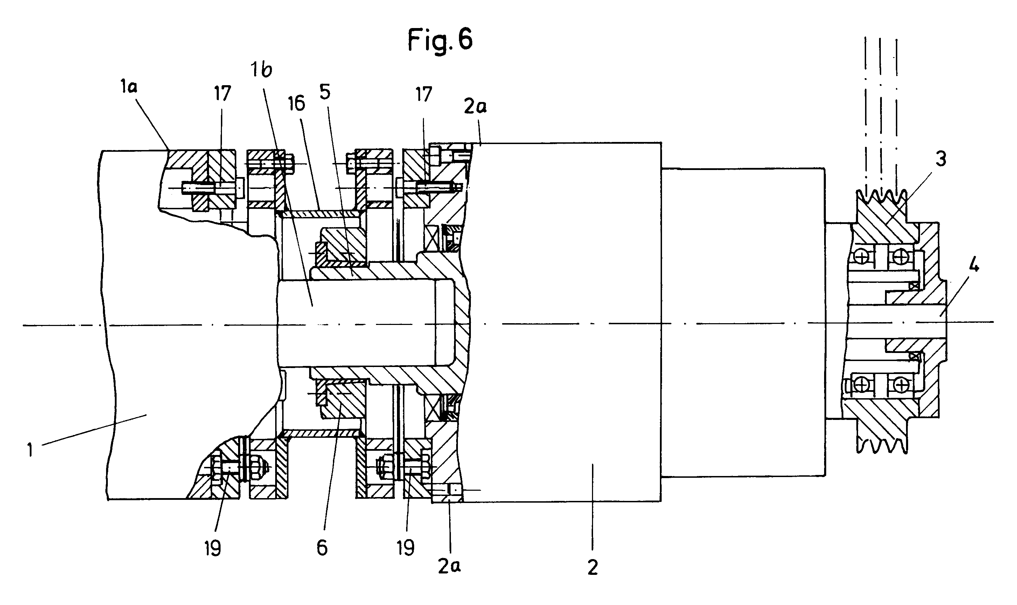

Fig. 6 zeigt wie eine Drehmomentenstütze nach Fig. 1 bis 5 zwischen einer Maschine 1 und einem Getriebe 2 montiert ist. Es handelt sich bei dem Getriebe, das lediglich im Prinzip dargestellt ist, um ein zweistufiges Umlaufrädergetriebe mit einer Antriebswelle 4 mit Antriebsscheibe 3. Die Abtriebswelle 5 des Getriebes ist auf die Antriebswelle 1b der Maschine aufgesteckt. Die Steckverbindung ist mit einer Schrumpfscheibe 6 in Verbindung mit einem konischen Ring fixiert. Diese Steckverbindung wird von der Hohlwelle 16 der Drehmomentenstütze umgeben. Linksseitig ist der äußere Ring 10a der Drehmomentenstütze mit Hilfe der Verbindungsschrauben 17 am Maschinengehäuse 1a feststehend angeschraubt, während rechtsseitig der äußere Ring 10a mit Hilfe der Verbindungsschrauben 17 am Gehäuse 2a des Getriebes fest angeschraubt ist. Auf Fig. 6 erkennt man auch die zum Anschrauben der Federlaschen dienenden Befestigungsschrauben 19.

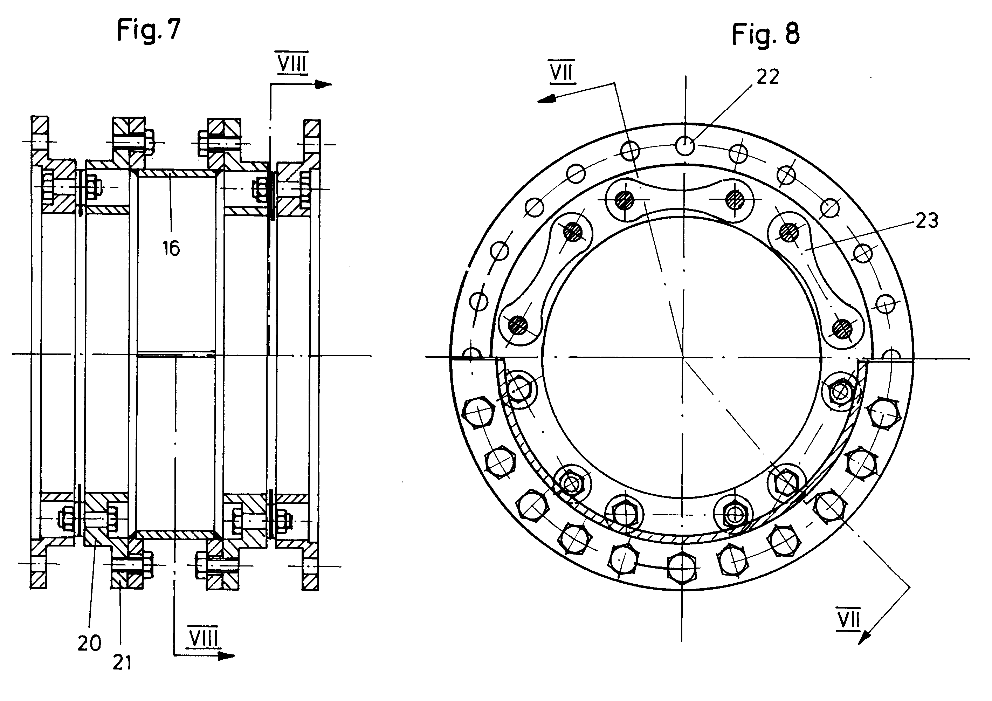

Bei der auf Fig. 7 und 8 dargestellten Drehmomentenstütze sind insgesamt sechs Federlaschen 23 vorgesehen, sinngemäß in der gleichen Anordnung wie bei dem vorbeschriebenen Ausführungsbeispiel. Bei der Drehmomentenstütze nach Fig. 7 und 8 sind Ringe 20 vorgesehen, bei denen nach außen am rechteckigen Querschnitt ein umlaufender Ringflansch 21 angeformt ist. An diesem Ringflansch 21 sind in gleichmäßigen Abständen Bohrungen 22 vorgesehen, zur Aufnahme der Verbindungsschrauben,mit denen die Verbindungen einerseits zur Hohlwelle, andererseits zum Getriebegehäuse bzw. Maschinengehäuse hergestellt werden.

Aus Fig. 9 erkennt man die Anordnung von Dehnmeßstreifen 24 an einer Lasche 23.

**Patentansprüche**

1. Drehmomentenstütze für Aufsteckgetriebe, bei dem eine Getriebewelle (5) mit der Welle (1b) einer Maschine (1) durch Aufstecken verbindbar ist, gekennzeichnet durch die nachfolgend genannten Merkmale:
– zwei gleiche Ringe (10b) mit Rechteckquerschnitt haben achsparallele Bohrungen (11) zur Aufnahme von Verbindungsschrauben (18), und sind mit diesen an den Flanschen einer Hohlwelle (16) drehfest und starr angeschraubt;
– an jedem Ring (10b) ist achsgleich ein weiterer gleicher mit der Maschine (1) bzw. dem Getriebe (2) verbindbarer Ring (10a) drehfest jedoch elastisch befestigt mit Hilfe mehrerer flach dazwischen liegender Federlaschen (13), die in der Draufsicht in der Anordnung von Sehnen eines Kreises mit gleichmäßigen Winkelabständen angeordnet sind und die in einem Endbereich mit einer Befestigungsschraube (19) am einen Ring (10a), am anderen Endbereich mit einer Befestigungsschraube (19) am anderen Ring (10b) angeschraubt sind;
– jede Bohrung (11) ist durch eine Ausnehmung (11a) zur Aufnahme des Schraubenkopfes erweitert;
– zur Aufnahme der Muttern der vom benachbarten Ring ausgehenden Befestigungsschrauben (19) sind durchgehende Bohrungen (12) gebildet;
– die Hohlwelle (16) ist aus zwei im Querschnitt halbkreisförmigen Teilen zusammengesetzt.

2. Drehmomentenstütze nach Anspruch 1 dadurch gekennzeichnet, daß die Bohrungen zur Aufnahme der Verbindungsschrauben (17, 18) in ein oder zwei Teilkreisen am Rechteckquerschnitt ausgebildet sind.

3. Drehmomentenstütze nach Anspruch 1, gekennzeichnet durch Ringe (20) mit einem vorstehenden Ringflansch (21), an dem Bohrungen (22) zur Aufnahme von Verbindungsschrauben ausgebildet sind.

4. Drehmomentenstütze nach Anspruch 1 dadurch gekennzeichnet, daß vorzugsweise an einer maschinenseitig gelegenen Lasche (23) Dehnmeßstreifen (24) angebracht sind.

**Claims**

1. Torque-absorbing support for detachable gear units, in which a gear shaft (5) can be connected to the shaft (1b) of a machine (1) by being slipped on, charcterized by the following features:
– two identical rings (10b) having a rectangular cross section have paraxial bores (11) for receiving assembly screws (18) and are screwed by the latter at the flanges of a hollow shaft (16) so as to be torsion-resistant and rigid;
– at each ring (10b) there is fastened, on the same axis, a further identical ring (10a) being connectable to the machine (1) or to the gear unit (2), by means of several flatly interposed spring shackles (13) in a torsion-resistant but resilient manner, said spring shackles being arranged, when viewed from above, like chords of a circle with uniform angular distances and are screwed at one end region by means of a fastening screw (19) to one ring (10a) and at the other end region by means of a fastening screw (19) to the other ring (10b);
– each bore (11) is widened by a recess (11a) for receiving the screw head;
– for receiving the nuts of the fastening screws (19) coming from the neighboring ring traversing bores (12) are provided;
– the hollow shaft (16) is composed of two parts which are semicircular in cross section.

2. Torque-absorbing support as claimed in claim 1, charaterized in that the bores for receiving the assembly screws (17, 18) are formed in one or two partial circles at the rectangular cross section.

3. Torque-absorbing support as claimed in claim 1, characterized by rings (20) with a projecting ring flange (21) at which bores (22) for receiving assembly screws are formed.

4. Torque-absorbing support as claimed in claim 1, characterized in that wire strain gauges (24) are fastend to a shackle (23) preferably positioned at the side of the machine.

**Revendications**

1. Support empêchant le couple de rotation pour engrenages amovibles avec un arbre de transmission (5) pouvant être attaché sur l'arbre (1b) d'une machine (1), caractérisé par les caractéristiques suivantes:
– deux anneaux identiques (10b) à section rectangulaire ont des alésages parallèles à l'axe (11) pour recevoir des boulons de jonction (18) avec laquelles ils sont fixés sur les brides d'un arbre creux (16) de manière résistante à la torsion et rigide;
– sur chaque anneau (10b) un anneau (10a) identique, pouvant être relié à la machine (1) ou à l'engrenage (2), est fixé sur le même axe, de manière résistante à la torsion mais élastique, à l'aide de plusieurs menottes de ressort (13) posées à plat entre les anneaux et qui, vus d'en haut, sont disposées comme des cordes de cercle se trouvant, l'une de l'autre, à des distances angulaires constantes et dont une extrémité est fixée sur un des anneaux (10a) avec un boulon de fixation (19) et dont l'autre extrémité est fixée également avec un boulon de fixation (19) sur l'autre anneau (10b);
  – chaque alésage (11) comporte un creux (11a) pour l'encastrement de la tête du boulon;
  – des alésages (12) traversant l'anneau permettent l'encastrement des écrous des boulons de fixation (19) de l'anneau avoisinant;
  – l'arbre creux (16) est compose de deux parties à section demi-circulaire

2. Support empêchant le couple de rotation selon la revendication 1, caractérisé en ce que les alésages recevant les boulons de jonction (17, 18) sont formés sur un ou deux cercles partiel, sur la section rectangulaire.

3. Support empêchant le couple de rotation selon la revendication 1, caractérisé par des anneaux (20) avec une bride saillante (21) comportant des alésages (22) pour recevoir des boulons de jonction.

4. Support empêchant le couple de rotation selon la revendication 1, caractérisé en ce que des jauges extensométriques (24) sont fixées sur une menotte de ressort (23) se trouvant, de préférence, du côté de la machine.

Fig. 1

Fig. 2

Fig. 3

Fig. 5

Fig. 4

# Fig. 6

EP 0 381 829 B1

Fig. 7

Fig. 8

EP 0 381 829 B1

Fig. 9